# EUROPEAN PATENT SPECIFICATION

(11) **EP 0 957 671 B1**
(45) Date of publication and mention of the grant of the patent: **06.09.2006**
(21) Application number: 96935596.5
(22) Date of filing: 08.11.1996
(51) Int. Cl.: A01D 75/18, A01F 29/06

(54) **DEVICE AND METHOD FOR MOVING AND CUTTING AN AGRICULTURAL CROP, SUCH AS HEMP**
VORRICHTUNG UND VERFAHREN UM EIN GEWÄCHS WIE HANF ZU MÄHEN UND SCHNEIDEN
DISPOSITIF ET PROCEDE SERVANT A MOISSONNER ET COUPER UNE RECOLTE AGRICOLE, TELLE QUE DU CHANVRE

(30) Priority: 08.11.1995 NL 1001602
(43) Date of publication of application: 24.11.1999
(73) Proprietor: Hemp Flax Exploitatie B.V., 3021 CV Rotterdam (NL)
(72) Inventor: Evenhuis, Nanno, 8355 VG Giethoorn (NL)
(74) Representative: Vernout, Robert
(86) International application number: PCT/NL1996/000439
(87) International publication number: WO 1997/016958

(56) References cited:
- DE-A- 2 750 501
- US-A- 2 196 149
- US-A- 2 857 946
- US-A- 3 469 378

## Description

The invention relates to a device for cutting fibrous material, said device being provided with a rotatable cutting member comprising a cutting blade, whose cutting edge when rotated moves substantially in a cylindrical plane which extends co-axially with respect to the axis of rotation, and with a stationary counter blade, whose cutting edge extends substantially in said cylindrical plane, whereby the cutting member is provided with two substantially disc shaped flanges, which extend perpendicularly to the axis of rotation on either side of the cutting blade and which have a diameter which is larger than the diameter of said cylindrical plane. A device of this type may be used for cutting an agricultural crop, for example hemp, into pieces of a selected length. Such a device is described in US-A-2857946.

Depending on the rate at which the crop is supplied, the rotational speed of the cutting member and the number of blades present on said cutting member, the crop is cut into pieces of a selected length.

One or more blades may thereby be mounted on the cutting member in such a manner that said cutting edge or cutting edges extend co-axially and are straight. The cutting edge(s) may also be helical, so that a limited part of the cutting blade will co-operate with the counter blade at all times upon passing said counter blade. The counter blade, which will usually have a straight cutting edge, is mounted co-axially.

A device of this type may be incorporated in a mowing machine, so that the agricultural crop is cut into pieces immediately after being mown and subsequently windrowed on the land. Feed rolls may be provided, which feed the crop in the correct manner and the correct position at a selected speed to the cutting member.

Especially in those cases where a fibrous crop is to be cut by means of the device, there is a danger that parts of the crop are properly separated from each other during the cutting operation, so that longer fibres may accumulate in the device, which fibres will in particular wrap themselves round the cutting member. In case of excessive wrapping of fibres round the cutting member, in particular round the cutting member shaft, the cutting member will get jammed or be bent in such a manner that the intended cutting operation can no longer be carried out. The longer fibres may also be formed as a result of shorter fibres twisting together, thus forming a longer fibre or an assembly of fibres.

Due to the presence of the flanges the area within which fibres may accumulate remains limited to the space between said two flanges, so that the fibres are for example prevented from finding their way into the area where the cutting member is journalled.

The object of the invention is to provide a device for cutting fibrous material, wherein the material is cut in an efficient manner and wherein fibres are prevented from accumulating round the cutting member.

In order to accomplish that objective at least one part of the side of each flange facing the cutting blade, which part extends outside said cylindrical plane, has a substantially conical surface. The conical surface of the flange thereby tapers off towards its axis of rotation in the direction of the cutting blade. In this manner both the crop to be cut and any fibres that may be present and that wrap themselves round the cutting member are led in the direction of the cutting blade.

As a result of the use of the invention longer fibres, which are formed as a result of parts of the agricultural crop not being completely separated from each other by the cutting operation, as well as fibres which are formed as a result of shorter fibres twisting together, cannot find their way into the area where the cutting member is journalled or in the area between the rotating cutting member and the stationary walls positioned on either side of the cutting member, in which said cutting member is journalled. Said fibres can only land in an area of the cutting member which is bounded by the two flanges, in which area no parts are present which move at mutually different speeds. When too many fibres accumulate in the cutting member, said fibres will land on or near the cutting blade, after which said fibres will be subjected to a cutting operation, so that they will move away from said cutting member.

According to another aspect of the invention the ends of the cutting blade abut the surfaces of the respective flanges, whereby the ends of the cutting blade preferably extend beyond the flange surfaces. The blade thereby extends into recesses in the flanges. As a result of this fibres being wrapped round the cutting member will always extend over the cutting edge of the blade, so that when sufficient fibres are present said fibres will be subjected to a cutting operation.

According to another aspect of the invention the cutting member is rotatable within a space which is bounded near each flange by a stationary wall provided perpendicularly to the axis of rotation, whereby said wall is provided with an annular member, which extends substantially round the respective flange. Said annular member may thereby have a conical surface, just like the flange, which tapers off in the same direction as the conical surface of said flange.

In addition to that said ring may butt closely against the flange, so that both the agricultural crop being supplied and any accumulating fibres will move along the stationary wall and the stationary ring provided thereon towards the rotating conical flange, after which they will be led to the cutting blade. In this manner it is impossible both for the crop and for any loose fibres to land between the rotating flange and the stationary wall, so that the cutting member is prevented from getting jammed.

As already said before, the blade of the cutting member may abut the surface of each of the flanges. This is not possible for the stationary counter blade, however, so that some space will be present between the end of the stationary counter blade and the rotating flanges at all times. This implies that part of the agricultural crop and/or of the fibres lying over the cutting edge of the blade cannot be cut, so that there is a risk of said crop or said fibres being wrapped round the cutting member. With the device according to the invention the amount of agricultural crop and/or fibres being wrapped round the cutting member will remain limited, because said crop and/or said fibres will be moved in the direction of the place where the counter blade co-operates with the cutting blade if there should be any further accumulation, so that said crop and/or said fibres will be cut.

The invention furthermore relates to a method for cutting fibrous material, for example an agricultural crop such as hemp, whereby said material is cut by means of a rotatable cutting member comprising a blade whose cutting edge moves substantially in a cylindrical plane which extends coaxially with respect to the axis of rotation, which blade co-operates with a stationary counter blade, whose cutting edge extends substantially in said cylindrical plane, wherein said cutting member is according to the invention provided with two substantially disc-shaped flanges, which extend perpendicularly to the axis of rotation on either side of the blade and which have a diameter which is larger than that of said cylindrical plane , wherein at least part of the side of each flange facing the cutting blade, which part extends outside the cylindrical plane, has a substantially conical surface.

Further aspects of the invention, which may be used both separately and in combination with each other, will be described in more detail with reference to the Figures and be defined in the claims.

Hereafter an embodiment of a device for cutting an agricultural crop, in particular hemp, will be described by way of illustration, whereby reference will be made to the drawing.
Figure 1 is a view of a cutting member;
Figure 2 is a sectional view along lineII-II of Figure 1;
Figure 3 shows part of Figure 2; and
Figure 4 is a sectional view along line IV-IV of Figure 3.

The Figures merely show a diagrammatic embodiment, with only the relevant parts being shown.

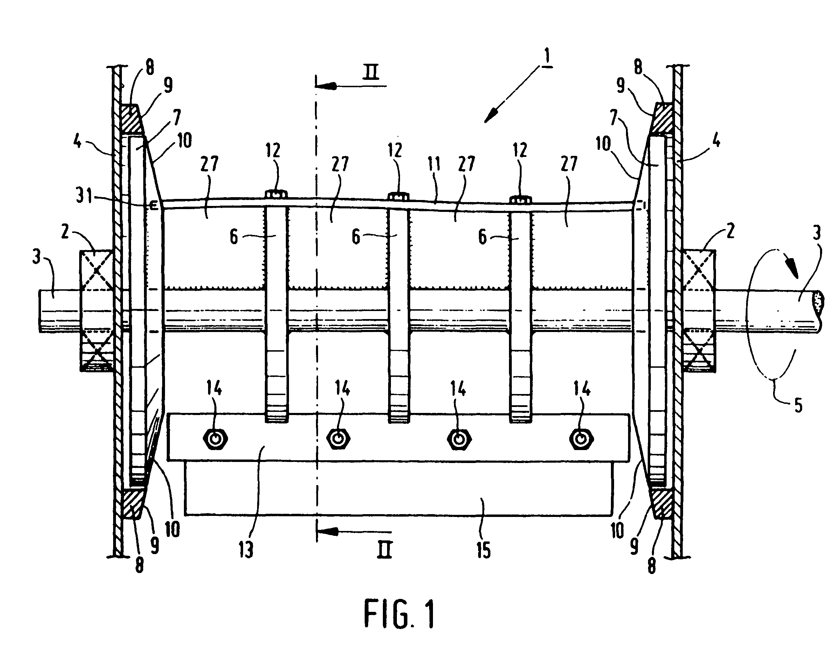

Figure 1 shows a rotatable cutting member 1, whose shaft 3 is rotatably journalled, by means of bearings 2, in a housing whose side walls 4 are illustrated in sectional view. Cutting member 1 can be rotated because shaft 3 is rotated, by driving means not shown, in the direction indicated by arrow 5.

Cutting member 1 is provided with three discs 6 which are radially provided on shaft 3, for example by being welded thereto. Furthermore two flanges 7 are welded to shaft 3, which flanges 7 have a larger diameter than discs 6.

The side walls 4 are each provided with a ring 8 attached thereto, which rings are provided round flanges 7 and which butt closely against the circumferential edge of flanges 7.

The facing sides 9 of rings 8 are tapered, and that to an angle which corresponds with a surface 10 of flanges 7, which is likewise tapered.

Cutting member 1 is provided with a blade 11, which is attached to the discs 6 by means of bolts 12. The length of blade 11 has been selected such that the ends thereof extend to within recesses 31 of flanges 7.

The device according to Figure 1 is furthermore provided with a stationary counter blade 13, which is attached to a part 15 of the frame of the device by means of bolts 14.

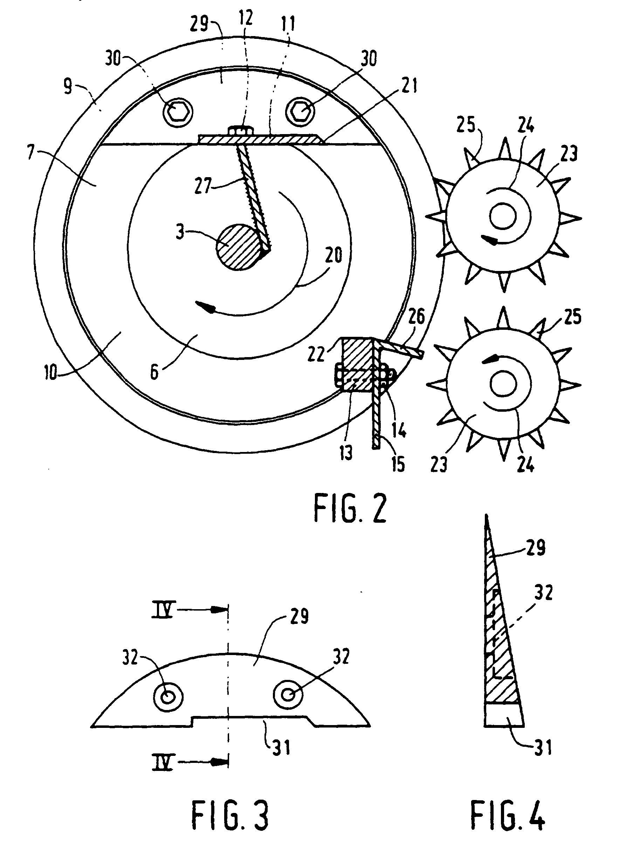

Figure 2 is a sectional view along lineII-II of Figure 1.

Figure 2 shows the manner in which blade 11 is mounted on a flat part of the circumference of disc 6 by means of bolt 12, and that in such a manner that the cutting edge 21 of blade 11 may co-operate with the cutting edge 22 of counter blade 13 upon rotation of the cutting member 1 in the direction indicated by arrow 20.

Figure 2 also shows two feed rolls 23, which rotate in the direction indicated by arrows 24. Feed rolls 23 are provided with catch means 25, by means of which an agricultural crop can be moved in the direction of cutting member 1. The agricultural crop is furthermore guided by guide surface 26 provided on frame 15, and by the conical shape of surface 9 of stationary ring 8 and surface 10 of flanges 7, so that all the crop is led to a space through which the cutting edge 21 of blade 11 passes. With each rotation of the cutting member a piece of the crop will be cut off, for example in lengths of 25 cm.

In the present embodiment blade 11 has a straight cutting edge 21, it is also possible, however, to design the blade 11 such that cutting edge 21 lies in a cylindrical plane and is helical. Furthermore it is possible for the cutting member to have more than one blade 11.

Figure 2 furthermore shows a guard plate 27, which on the one hand abuts blade 11 and which is on the other hand welded to two discs 6 and to shaft 3. Figure 1 shows four such guard plates 27, two between discs 6 and two between disc 6 and flange 7. Guard plates 27 prevent the agricultural crop from passing over shaft 3 instead of under shaft 3.

Figure 2 shows that flange 7 is provided with a detachable part 29, which is illustrated separately in Figure 3. Said detachable part 29 may be attached to flange 7 by means of bolts 30.

Detachable part 29 is provided with a recess 31, into which blade 11 can extend. Mounting or detaching of blade 11 is possible in the detached position of detachable part 29, and part 29 supports blade 11 in the mounted position of said detachable part 29 in the cutting member.

Figure 4 is a sectional view along line IV-IV of Figure 3, albeit on a larger scale. Figure 4 shows that holes 32 are formed in such a manner that the head of bolt 30 does not project from the surface of flange 7.

By designing the device in the manner shown in the embodiment, fibres and/or parts of the crop to be cut are prevented from wrapping themselves round the cutting member 1 in such manner as to cause the cutting member to jam. As a result of the presence of stationary rings 9 and the conical surface 10 of flanges 7 material wrapping itself round cutting member 1 will automatically be led to blade 11. Since counter blade 13 does not completely abut flanges 7, there is a possibility of material landing between counter blade 13 and the flanges 7, reaching as far as shaft 3, but this material will always pass the cutting edge 21 of blade 11. When said material accumulates, it will pass the counter blade and be cut, therefore.

The illustrated embodiment of the invention is to be considered as a mere example, also other embodiments may fall within the scope of the invention as defined by the claims.

## Claims

1. A device for cutting fibrous material, said device being provided with a rotatable cutting member (1) comprising a cutting blade (11), whose cutting edge (21) when rotated moves substantially in a cylindrical plane which extends co-axially with respect to the axis of rotation, and with a stationary counter blade (13), whose cutting edge (22) extends substantially in said cylindrical plane, whereby the cutting member (1) is provided with two substantially disc shaped flanges (7), which extend perpendicularly to the axis of rotation on either side of the cutting blade (11) and which have a diameter which is larger than the diameter of said cylindrical plane, **characterized in that** at least one part of the side of each flange facing the cutting blade (11), which part extends outside said cylindrical plane, has a substantially conical surface (10).

2. A device according to claim 1, **characterized in that** the ends of the cutting blade (11) abut the surfaces of the respective flanges (7).

3. A device according to claim 1 or 2, **characterized in that** said cutting member (1) is rotatable within a space which is bounded near each flange (7) by a stationary wall (4) provided perpendicularly to the axis of rotation, whereby said wall (4) is provided with an annular member (8), which extends substantially round the respective flange(7)

4. A device according to claim 3, **characterized in that** said annular member (8) has a conical surface (9), which extends from the outside to the inside, in a direction away from said wall (4).

5. A device according to any one of the preceding claims, **characterized in that** said cutting member (1) is provided with a central, axially extending shaft (3), and that one or more guard plates (27) are provided between said shaft (3) and said blade (11).

6. A machine for mowing and processing an agricultural crop comprising means for mowing said crop and means for guiding the crop being mown to a cutting device, said machine being provided with a device according to any one of the preceding claims.

7. A method for cutting fibrous material, whereby said material is cut by means of a rotatable cutting member (1) comprising a cutting blade (11) whose cutting edge (21) moves substantially in a cylindrical plane which extends co-axially with respect to the axis of rotation, which blade (11) co-operates with a stationary counter blade (13), whose cutting edge (22) extends substantially in said cylindrical plane, wherein said cutting member (1) is provided with two substantially disc-shaped flanges (7), which extend perpendicularly to the axis of rotation on either side of the blade (11) and which have a diameter which is larger than that of said cylindrical plane, **characterized in that** at least part of the side of each flange (7) facing the cutting blade (11), which part extends outside said cylindrical plane, has a substantially conical surface (10).

8. A method according to claim 7, **characterized in that** the ends of said blade (11) abut the surfaces of the respective flanges (7).

9. A method for mowing and processing an agricultural crop, whereby said crop is mown and then passed to a cutting device, in which said crop is subjected to an operation according to the method of any one of the claims 7 - 9.

## Patentansprüche

1. Vorrichtung zum Schneiden von faserigem Material, wobei die genannte Vorrichtung mit einem drehbaren Schneidteil (1) versehen ist, welches ein Schneidmesser (11) aufweist, dessen Schneidkante (2) sich bei einer Drehung im wesentlichen in einer zylindrischen Ebene bewegt, die sich koaxial in bezug auf die Drehachse erstreckt, und mit einem ortsfesten Gegenmesser (13), dessen Schneidkante (22) sich im wesentlichen in der genannten zylindrischen Ebene erstreckt, wobei das Schneidteil (1) mit zwei im wesentlichen scheibenförmigen Flanschen (7) versehen ist, die sich senkrecht zu der Drehachse auf beiden Seiten des Schneidmessers (11) erstrecken und die einen Durchmesser aufweisen, der größer ist als der Durchmesser der genannten zylindrischen Ebene, **dadurch gekennzeichnet, daß** zumindest ein Teil der Seite eines jeden Flanschs, der zu dem Schneidmesser (11) weist, wobei dieser Teil sich außerhalb der genannten zylindrischen Ebene erstreckt, eine im wesentlichen konische Oberfläche (10) aufweist.

2. Vorrichtung nach Anspruch 1, **dadurch gekennzeichnet, daß** die Enden des Schneidmessers (11) gegen die Oberflächen der entsprechenden Flansche (7) anstoßen.

3. Vorrichtung nach Anspruch 1 oder 2, **dadurch gekennzeichnet, daß** das genannte Schneidteil (1) drehbar innerhalb eines Zwischenraums ist, der in der Nähe eines jeden Flanschs (7) durch eine ortsfeste Wand (4) begrenzt ist, die senkrecht zu der Drehachse angeordnet ist, wobei die genannte Wand (4) mit einem ringförmigen Teil (8) versehen ist, welches sich im wesentlichen um den jeweiligen Flansch (7) herum erstreckt.

4. Vorrichtung nach Anspruch 3, **dadurch gekennzeichnet, daß** das genannte ringförmige Teil (8) eine konische Oberfläche (9) aufweist, die sich von der Außenseite zu der Innenseite erstreckt, in einer Richtung weg von der genannten Wand (4).

5. Vorrichtung nach einem der vorangehenden Ansprüche, **dadurch gekennzeichnet, daß** das genannte Schneidteil (1) mit einer zentralen, sich in axialer Richtung erstreckenden Welle (3) versehen ist, und daß eine oder mehrere Schutzplatten (27) zwischen der genannten Welle (3) und dem genannten Messer (11) angeordnet sind.

6. Maschine zum Mähen und Verarbeiten einer landwirtschaftlichen Nutzpflanze, mit einem Mittel zum Mähen der genannten Pflanze und einem Mittel zum Führen der Pflanze, die gemäht wird, zu einer Schneidvorrichtung, wobei die genannte Maschine mit einer Vorrichtung nach einem der vorangehenden Ansprüche versehen ist.

7. Verfahren zum Schneiden eines faserigen Materials, wobei das genannte Material mit Hilfe eines drehbaren Schneidteils (1) geschnitten wird, das ein Messer (11) aufweist, dessen Schneidkante (21) sich im wesentlichen in einer zylindrischen Ebene bewegt, die sich koaxial in bezug auf die Drehachse erstreckt, wobei das Messer (11) mit einem ortsfesten Gegenmesser (13) zusammenwirkt, dessen Schneidkante (22) sich im wesentlichen in der genannten zylindrischen Ebene erstreckt, wobei das Schneidmesser (1) mit zwei im wesentlichen scheibenförmigen Flanschen (7) versehen ist, die sich senkrecht zu der Drehachse auf beiden Seiten des Messers (11) erstrecken und die einen Durchmesser aufweisen, der größer als der der genannten zylindrischen Ebene ist, **dadurch gekennzeichnet, daß** zumindest ein Teil der Seite eines jeden Flanschs (7), der zu dem Schneidmesser (11) weist, wobei sich dieser Teil außerhalb der zylindrischen Ebene erstreckt, eine im wesentlichen konische Oberfläche (10) aufweist.

8. Verfahren nach Anspruch 7, **dadurch gekennzeichnet, daß** die Enden des genannten Messers (11) gegen die Oberflächen der jeweiligen Flansche (7) anstoßen.

9. Verfahren zum Mähen und Verarbeiten einer landwirtschaftlichen Nutzpflanze, bei dem die genannte Pflanze geschnitten und dann zu einer Schneidvorrichtung gebracht wird, in der die genannte Pflanze einem Vorgang gemäß dem Verfahren nach einem der Ansprüche 7 bis 9 unterworfen wird.

## Revendications

1. Dispositif de coupe d'un matériau fibreux, le dispositif étant muni d'un organe rotatif de coupe (1) comprenant une lame de coupe (11) dont le bord de coupe (21), pendant la rotation, se déplace pratiquement dans un plan cylindrique qui s'étend coaxialement à l'axe de rotation, et une lame antagoniste fixe (13) dont le bord de coupe (22) s'étend pratiquement dans le plan cylindrique, l'organe de coupe (1) étant muni de deux flasques (7) ayant pratiquement une forme de disque et qui s'étendent perpendiculairement à l'axe de rotation de part et d'autre de la lame de coupe (11) et ont un diamètre supérieur à celui du plan cylindrique, **caractérisé en ce qu'**une partie au moins du côté de chaque flasque tourné vers la lame de coupe (11), cette partie s'étendant à l'extérieur du plan cylindrique, a une surface pratiquement conique (10).

2. Dispositif selon la revendication 1, **caractérisé en ce que** les extrémités de la lame de coupe (11) sont en butée contre les surfaces des flasques respectifs (7).

3. Dispositif selon la revendication 1 ou 2, **caractérisé en ce que** l'organe de coupe (1) est destiné à tourner dans un espace qui est délimité près de chaque flasque (7) par une paroi fixe (4) disposée perpendiculairement à l'axe de rotation, de sorte que la paroi (4) a un organe annulaire (8) qui s'étend pratiquement autour du flasque respectif (7).

4. Dispositif selon la revendication 3, **caractérisé en ce que** l'organe annulaire (8) a une surface conique (9) qui s'étend depuis l'extérieur vers l'intérieur en s'écartant de la paroi (4).

5. Dispositif selon l'une quelconque des revendications précédentes, **caractérisé en ce que** l'organe de coupe (1) est muni d'un arbre axial central (3), et **en ce qu'**une ou plusieurs plaques protectrices (27) sont disposées entre l'arbre (3) et la lame (11).

6. Machine de tonte et de traitement d'une matière de récolte agricole comprenant un dispositif de tonte de la matière de récolte et un dispositif de guidage de la matière de récolte tondue vers un dispositif de coupe, la machine étant munie d'un dispositif selon l'une quelconque des revendications précédentes.

7. Procédé de coupe d'un matériau fibreux, tel que le matériau est coupé par un organe rotatif de coupe (1) qui comprend une lame de coupe (11) dont le bord de coupe (21) se déplace pratiquement dans un plan cylindrique qui s'étend coaxialement à l'axe de rotation, la lame (11) coopérant avec une lame antagoniste fixe (13) dont le bord de coupe (22) s'étend pratiquement dans le plan cylindrique, dans lequel l'organe de coupe (1) a deux flasques (7) pratiquement en forme de disques qui s'étendent perpendiculairement à l'axe de rotation de part et d'autre de la lame (11) et ont un diamètre supérieur à celui du plan cylindrique, **caractérisé en ce qu'**une partie au moins du côté de chaque flasque (7) tourné vers la lame de coupe (11), cette partie s'étendant à l'extérieur du plan cylindrique, a une surface pratiquement conique (10).

8. Procédé selon la revendication 7, **caractérisé en ce que** les extrémités de la lame (11) sont en butée contre les surfaces des flasques respectifs (7).

9. Procédé de tonte et de traitement d'une matière de récolte agricole, par lequel la matière de récolte est tondue puis transmise à un dispositif de coupe, dans lequel la matière de récolte est soumise à une opération selon le procédé de l'une des revendications 7 et 8.
